# FASCICULE DE BREVET EUROPEEN

(11) **EP 0 373 487 B1**
(45) Date de publication et mention de la délivrance du brevet: **15.09.1993**
(21) Numéro de dépôt: 89122435.4
(22) Date de dépôt: 05.12.1989
(51) Int. Cl.: G05D 23/30, A47J 37/08

(54) **Dispositif de commande électronique de l'alimentation d'une résistance chauffante**
Vorrichtung zur elektronischen Steuerung des Versorgungsstromes eines Heizwiderstandes
Electronic control device for the power supply of a heating resistor

(30) Priorité: 12.12.1988 FR 8816331
(43) Date de publication de la demande: 20.06.1990
(73) Titulaire: MOULINEX, F-93171 Bagnolet (FR)
(72) Inventeur: Basora, Sanjuan Antonio Moulinex Espana S.A., Barcelone 21 (ES)
(74) Mandataire: May, Hans Ulrich, Dr.

(56) Documents cités:
- WO-A-84/01684
- GB-A- 2 105 974
- US-A- 3 659 782
- US-A- 4 395 621

## Description

La présente invention concerne un dispositif de commande électronique de l'alimentation électrique d'une résistance chauffante destinée à chauffer une enceinte de cuisson ou de grillage telle que, l'enceinte chauffante d'un grille-pain.

L'invention se rapporte plus particulièrement à un dispositif électronique tel que décrit dans le brevet US 4 395 621 et comportant un détecteur apte à déterminer la température régnant dans l'enceinte, relié électriquement à un circuit électronique de temporisation réglable selon une température de consigne choisie par l'utilisateur, et destiné notamment à commander l'ouverture d'un interrupteur monté en série avec ladite résistance.
Dans les dispositifs de commande électronique connus, le détecteur de température est situé dans l'enceinte de cuisson, à proximité de la résistance chauffante. L'ambiance chaude de l'enceinte de cuisson peut provoquer au bout d'un certain temps une altération du détecteur occasionnant de fausses durées de temporisation. Pour pallier cet inconvénient, on utilise des détecteurs de très haute qualité, donc onéreux. Malgré cela, il survient, au bout d'un temps plus long, une certaine altération des caractéristiques fonctionnelles de ces détecteurs .

On connaît également par le brevet WO-A-84 01 684 l'utilisation d'un modèle thermique comprenant une résistance et une thermistance et ayant des caractéristiques de perte et d'absorbtion de chaleur similaires à celles d'un tuyau de lance dans lequel circule un fluide dont la température doit être contrôlée en fonction de la température ambiante.

La présente invention a pour but de réaliser un dispositif de commande électronique de l'alimentation électrique d'une résistance chauffante, de manière que la régulation de température dans l'enceinte soit assurée de façon fiable et durable . Un autre but de l'invention est de réaliser un dispositif peu coûteux, facile à mettre en oeuvre et adaptable sur des appareils fabriqués en grande série .

Selon l'invention, le détecteur de température est monté en dehors de l'enceinte et comprend une resistance variable ,par exemple une thermistance , qui est en relation thermique avec la résistance calibrée, et qui est reliée électriquement au circuit de temporisation de façon à commander ce circuit, les caractèristiques thermiques du détecteur étant telles que le circuit de temporisation commande l'ouverture de l'interrupteur pratiquement à l'instant où la résistance chauffante atteint la température de consigne.

Grâce au couple formé par les résistances calibrée et variable, on recrée hors de l'enceinte chauffante un modèle thermique simulant les conditions de température régnant dans cette enceinte. On comprendra qu'un tel détecteur est particulièrement intéressant pour la commande d'un grille-pain, car il soustrait les composants du détecteur aux sévères conditions thermiques régnant dans l'enceinte étroite de réception des tranches de pain. De plus, il permet de prendre en compte la chaleur résiduelle dans l'enceinte de cuisson, lors des démarrages successifs de l'appareil.

Suivant une réalisation préférée de l'invention, le détecteur comporte en outre un moyen de régulation thermique.

Suivant une réalisation particulièrement avantageuse de l'invention, la résistance calibrée étant montée sur l'une des faces d'un circuit imprimé , et la résistance variable étant située au dessus de ladite résistance calibrée , le moyen de régulation thermique du détecteur est formé par une ouverture de ventilation pratiquée dans la plaque du circuit imprimé , en dessous de la résistance calibrée , de manière à créer un courant d'air au travers de ladite ouverture de ventilation.

Cette réalisation permet d'ajuster le dispositif de commande, en changeant les caractèristiques thermiques du détecteur, c'est-à-dire en modifiant les valeurs relatives non seulement de la résistance calibrée et de la résistance variable , mais aussi de la taille de l'ouverture de ventilation.

Les caractèristiques et avantages de l'invention ressortiront d'ailleurs de la description détaillée qui va suivre, à titre d'exemple, en réfèrence au dessin annexé dans lequel :
La figure 1 représente un schéma électrique d'un dispositif de commande comportant un détecteur selon l'invention ;
la figure 2 représente les courbes de température de la résistance calibrée et de la résistance chauffante en fonction du temps ;
la figure 3 représente en perspective une disposition des composants du détecteur montés sur un circuit imprimé.

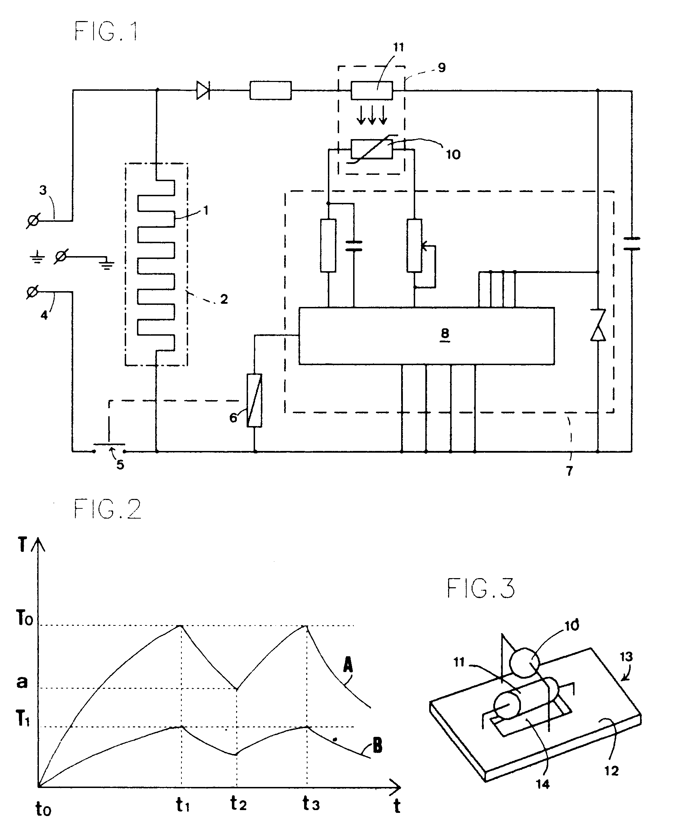

Le schéma électronique de la figure 1 illustre un dispositif de commande de l'alimentation électrique d'une résistance chauffante électrique 1 destinée à chauffer une enceinte de grillage 2 d'un grille-pain (shématisée en traits interrompus). La résistance chauffante est reliée par deux bornes 3 et 4 au réseau d'alimentation électrique. Un interrupteur 5 est monté en série avec ladite résistance chauffante 1 et est adapté à être fermé pour la position basse du panier correspondant à la cuisson du pain. L'ouverture de cet interrupteur 5 est commandé, par exemple par l'intermédiaire d'un électro-aimant 6, par un circuit électronique de temporisation 7 réglable selon une température de consigne To choisie par l'utilisateur et comprenant, de façon connue en soi, un circuit intègré 8 renfermant un compteur et une horloge interne. Le circuit de temporisation 7 détermine le temps de cuisson par rapport à la température de consigne. Un détecteur 9 apte à déterminer la température est relié électriquement au circuit de temporisation 7-8 dont il fait varier la fréquence d'horloge de manière à modifier le temps de cuisson.

Le détecteur 9 est monté en dehors de l'enceinte de grillage 2 et comprend une résistance variable 10, par exemple une thermistance à coéfficient négatif (cTN), qui est en relation thermique avec une résistance calibrée 11, et qui est reliée électriquement au circuit de temporisation 7-8 de façon à commander ce circuit, les caractèristiques thermiques du détecteur étant telles que le circuit de temporisation commande l'ouverture de l'interrupteur 5 pratiquement à l'instant où la résistance chauffante 1 atteint la température de consigne To.

Ainsi, grâce à l'agencement du détecteur 9 hors de l'enceinte 2 qui le soustrait totalement à l'influence thermique de l'enceinte, on peut utiliser pour les résistances variable 10 et calibrée 11 des composants ordinaires provenant de fabrication en grande série. La résistance calibrée 11 du type résistance bobinée est branchée en parallèle à la résistance chauffante 1 et est montée à proximité de la résistance variable 10, de manière que le rayonnement calorifique qu'elle émet influence directement ladite résistance variable 10.

Ainsi, en se référant à la figure 2, par le choix relatif des composants du détecteur 9, la courbe de température B en fonction du temps de la résistance calibrée 11 est sensiblement proportionnelle à celle de la résistance chauffante 1, ce qui permet, de prendre en compte la chaleur résiduelle dans l'enceinte de réception des tranches de pain, lors des démarrages succesifs de l'appareil .

A la première mise en marche de l'appareil, l'enceinte de grillage est froide. A compter de la fermeture de l'interrupteur 5 au temps to, la résistance chauffante chauffe jusqu'à atteindre une température de consigne To , tandis que la résistance calibrée 11 atteint une température de consigne compensée T1. Grâce aux informations que lui transmet le détecteur 9, le circuit de temporisation 7-8 commande l'électroaimant 6 qui ouvre l'interrupteur au temps t1 et coupe ainsi l'alimentation électrique des résistances chauffante et calibrée qui refroidissent alors simultanément.

Lors d'une deuxième mise en marche de l'appareil par la fermeture de l'interrupteur 5 au temps t2 (abaissement du panier dans l'enceinte), le détecteur 9 doit tenir compte de la chaleur résiduelle régnant dans cette enceinte. Il faut donc que la résistance calibrée 11 atteigne la température de consigne compensée T1 au même moment que la résistance chauffante atteint la température de consigne To , quelle que soit la température résiduelle . Dans le cas idéal les deux courbes de température doivent être proportionnelles.

Pour faciliter l'obtention d'une telle proportionalité entre les courbes, le détecteur 9 comporte en outre un moyen de régulation thermique.

Suivant une réalisation préférée de l'invention et en se référant à la figure 3, la résistance calibrée 11 étant montée sur l'une 12 des faces d'une plaque 13 d'un circuit imprimé et la résistance variable 10 étant située au dessus de la résistance calibrée 11, le moyen de régulation thermique du détecteur 9 est formé par une ouverture de ventilation 14 pratiquée dans la plaque 13 du circuit imprimé, en dessous de la résistance calibrée 11, de manière à créer un courant d'air au travers de ladite ouverture de ventilation 14.

Pour cela, la plaque 13 du circuit imprimé est monté horizontalement dans le boîtier (non représenté) de l'appareil, de manière que l'entrée de l'ouverture de ventilation 14 située à l'opposé de la résistance calibrée 11 reste dégagée pour permettre le courant d'air au travers de ladite ouverture.

Les caractéristiques thermiques du détecteur 9 sont ajustées par variation des valeurs relatives non seulement des résistances calibrée 11 et variable 10, mais aussi de la taille de l'ouverture de ventilation 14.

Par exemple, on obtient une pente de refroidissement plus rapide quand on augmente la taille de l'ouverture de ventilation 14. Il suffit donc d'adapter ces trois valeurs pour rendre la constante thermique de la courbe de température B de la résistance calibrée 11 sensiblement proportionnelle à celle de la résistance chauffante 1.

## Revendications

1. Dispositif de commande électronique de l'alimentation électrique d'une résistance chauffante (1) qui est destinée à chauffer l'enceinte de grillage (2) d'un grille-pain et qui est reliée aux bornes du réseau d'alimentation électrique, et comportant un détecteur (9) apte à déterminer la température régnant dans l'enceinte (2) et relié électriquement à un circuit électronique de temporisation (7) réglable selon une température de consigne To choisie par l'utilisateur, et destiné notamment à commander l'ouverture d'un interrupteur (5) monté en série avec ladite résistance (1), les caractéristiques thermiques du détecteur (9) étant telles que le circuit de temporisation (7) commande l'ouverture de l'interrupteur (5) pratiquement à l'instant où la résistance chauffante (1) atteint la température de consigne (To), caractérisé en ce que le détecteur (9) est monté en dehors de l'enceinte (2) et comprend une résistance calibrée 11 et une résistance variable (10) par exemple une thermistance, qui est reliée électriquement au circuit de temporisation (7) de façon à commander ce circuit et qui est en relation thermique avec la résistance calibrée (11) branchée à la résistance chauffante (1).

2. Dispositif selon la revendication 1 ,
**caractérisé** en ce que la résistance calibrée (11) est branchée en parallèle à la résistance chauffante (1) et est montée à proximité de la résistance variable (10), de manière que le rayonnement calorifique qu'elle émet influence directement ladite résistance variable (10).

3. Dispositif selon la revendication 2,
**caractérisé** en ce que le détecteur (9) comporte en outre un moyen de régulation thermique .

4. Dispositif selon la revendication 3,
**caractérisé** en ce que la résistance calibrée (11) étant montée sur l'une (12) des faces d'une plaque (13) d'un circuit imprimé , et la résistance variable (10) étant située au dessus de ladite résistance calibrée (11), le moyen de régulation thermique du détecteur (9) est formé par une ouverture de ventilation (14) pratiquée dans la plaque (13) du circuit imprimé , en dessous de la résistance calibrée (11), de manière à créer un courant d'air au travers de ladite ouverture de ventilation (14).

5. Dispositif selon la revendication 4,
**caractèrisé** en ce que les caractèristiques thermiques du détecteur (9) sont ajustées par variation des valeurs relatives, non seulement de la résistance calibrée (11) et de la résistance variable (10), mais aussi de la taille de l'ouverture de ventilation (14).

## Claims

1. An electronic control device for the electric power supply of a heating resistor (1) which is intended to heat the toasting enclosure (2) of a toaster and which is connected to the terminals of the electricity supply system, and comprising a detector (9) able to determine the temperature prevailing in the enclosure (2) and connected electrically to an electronic delay line (7) which can he controlled according to a control temperature To chosen by the user, and intended in particular to control the opening of a switch (5) mounted in series with said resistor (1), the thermal characteristics of the detector (9) being such that the delay line (7) controls the opening of the switch (5) practically at the moment when the heating resistor (1) reaches the control temperature (To),
**characterised in that** the detector (9) is mounted outside the enclosure (2) and comprises a calibrated resistor 11 and a variable resistor (10), for example a thermistor, which is connected electrically to the delay line (7) so as to control this line and which is in thermal relationship with the calibrated resistor (11) connected to the heating resistor (1).

2. A device according to Claim 1,
**characterised in that** the calibrated resistor (11) is connected in parallel to the heating resistor (10) and is mounted close to the variable resistor (10) so that the thermal radiation which it emits has a direct effect on said variable resistor (10).

3. A device according to Claim 2,
**characterised in that** the detector (9) also comprises a thermal regulation means.

4. A device according to Claim 3,
**characterised in that** as the calibrated resistor (11) is mounted on one (12) of the faces of a board (13) of a printed circuit, and as the variable resistor (10) is situated above said calibrated resistor (11), the thermal regulation means of the detector (9) is formed by a ventilation aperture (14) provided in the board (13) of the printed circuit, beneath the calibrated resistor (11), so as to create a current of air through said ventilation aperture (14).

5. A device according to Claim 4,
**characterised in that** thermal characteristics of the detector (9) are adjusted by varying the relative values, not only of the calibrated resistor (11) and of the variable resistor (10), but also of the size of the ventilation aperture (14).

## Patentansprüche

1. Vorrichtung zur elektronischen Steuerung des Versorgungsstromes eines Heizwiderstandes (1), der zum Erhitzen des Röstraumes (2) eines Brotrösters dienen soll und mit den Klemmen des elektrischen Versorgungsnetzes verbunden ist, wobei die Vorrichtung einen Fühler (9) aufweist, der zur Bestimmung der im Röstraum (2) herrschenden Temperatur geeignet und elektrisch mit einem elektronischen Zeitschaltkreis (7) verbunden ist, der gemäß einer vom Benutzer gewählten Solltemperatur (T0) regelbar und besonders dazu bestimmt ist, das Öffnen eines in Reihe mit dem Widerstand (1) liegenden Schalters (5) zu steuern, wobei die thermischen Merkmale des Fühlers (9) so sind, daß der Zeitschaltkreis (7) das Öffnen des Schalters (5) praktisch in dem Augenblick steuert, wo der Heizwiderstand (1) die Solltemperatur (T0) erreicht, **dadurch gekennzeichnet**, daß der Fühler (9) außerhalb des Röstraumes (2) montiert ist und einen kalibrierten Widerstand (11) und einen variablen Widerstand (10), beispielsweise einen Thermistor aufweist, der elektrisch mit dem Zeitschaltkreis (7) so verbunden ist, daß er diesen Schaltkreis steuert, und der in thermischer Beziehung mit dem an den Heizwiderstand (1) angeschlossenen kalibrierten Widerstand (11) steht.

2. Vorrichtung nach Anspruch 1, **dadurch gekennzeichnet,** daß der kalibrierte Widerstand (11) parallel zum Heizwiderstand (1) angeschlossen ist und in der Nähe des variablen Widerstandes (10) montiert ist, so daß die von ihm ausgesandte Wärmestrahlung direkt den variablen Widerstand (10) beeinflußt.

3. Vorrichtung nach Anspruch 2, **dadurch gekennzeichnet,** daß der Fühler (9) außerdem eine Wärmesteuerungsvorrichtung aufweist.

4. Vorrichtung nach Anspruch 3, **dadurch gekennzeichnet,** daß der kalibrierte Widerstand (11) auf einer Seite (12) der Seiten einer Platte (13) einer gedruckten Schaltung montiert ist und der variable Widerstand (10) oberhalb des kalibrierten Widerstandes (11) angeordnet ist und daß die Wärmesteuerungsvorrichtung des Fühlers (9) von einer Belüftungsöffnung (14) gebildet ist, die in der Platte (13) der gedruckten Schaltung unterhalb des kalibrierten Widerstandes (11) so ausgebildet ist, daß ein Luftstrom durch die Belüftungsöffnung (14) erzeugt wird.

5. Vorrichtung nach Anspruch 4, **dadurch gekennzeichnet,** daß die thermischen Merkmale des Fühlers (9) durch Veränderung der relativen Werte nicht nur des kalibrierten Widerstandes (11) und des variablen Widerstandes (10), sondern auch der Größe der Belüftungsöffnung (14) eingestellt werden.
